# EUROPEAN PATENT APPLICATION

(11) **EP 4 624 929 A1**
(43) Date of publication of application: **01.10.2025**
(21) Application number: 22966525.2
(22) Date of filing: 25.11.2022
(51) Int. Cl.: G01N 35/00

(54) **TEMPERATURE CONTROL DEVICE**

(71) Applicant: HITACHI HIGH-TECH CORPORATION, Tokyo 105-6409 (JP)
(72) Inventor: SATOH Wataru, Tokyo 100-8280 (JP); ISOSHIMA Nobuyuki, Tokyo 105-6409 (JP); SHIBAHARA Masashi, Tokyo 105-6409 (JP); MAKINO Yoko, Tokyo 105-6409 (JP)
(74) Representative: Mewburn Ellis LLP
(86) International application number: PCT/JP2022/043555
(87) International publication number: WO 2024/111116

(57) **Abstract**

To provide a temperature control device capable of accurately instructing a temperature of a temperature regulating block by setting a temperature measuring unit and a wiring to have the same temperature as a temperature of the temperature regulating block and realizing highly accurate temperature control. A temperature control device 1 including a temperature regulating block 2 capable of accommodating a sample and/or a reagent and a temperature control unit 3 that controls a temperature of the temperature regulating block 2 includes a first opening portion 8 formed in the temperature regulating block **2,** and a pressing portion 7 that inserts a temperature sensor 4 including a temperature measuring unit 4a and a wiring 4b into the first opening portion 8 such that the temperature measuring unit 4a abuts on the temperature regulating block **2.** The pressing portion 7 presses the temperature measuring unit 4a and the wiring 4b against an inner wall surface of the first opening portion 8.

## Description

### Technical Field

The present invention relates to a temperature control device used in a genetic testing device, an automatic analyzer, and the like.

### Background Art

In the genetic testing device, deoxyribonucleic acid (DNA) contained in a sample is amplified and detected. Here, as a method for amplifying DNA, a PCR (Polymerase Chain Reaction) method is widely used. In the PCR method, a sample solution containing DNA and a solution containing a reagent for amplifying DNA are mixed, and is denatured, for example, into a single strand at 94°C, and a complementary strand is synthesized at 60°C. DNA can be amplified exponentially by repeating such temperature changes. On the other hand, in such a temperature cycle, a time required for temperature change such as cooling from 94°C to 60°C and heating from 60°C to 94°C is needed, and thus there is a problem that the temperature cycle takes time. In order to shorten the testing time, speeding up of the temperature change is required.

In order to speed up the temperature control, it is possible to speed up the temperature change by increasing the amount of absorbed and emitted heat in a temperature control device or reducing the size of a temperature regulating block as a temperature control target to reduce the heat capacity. In any method, highly accurate temperature control is required, but particularly when the size of the temperature regulating block is reduced, a temperature sensor also needs to be downsized at the same time. Furthermore, in a case where the temperature regulating block and the temperature sensor are downsized, it is difficult to bring the temperature sensor into close contact with the temperature regulating block and fix the temperature sensor. When a gap is generated between the temperature sensor and the temperature regulating block and the contact thermal resistance increases, the indication temperature of the temperature sensor becomes lower than the actual temperature regulating block temperature, which causes a problem that highly accurate temperature control becomes difficult.

In order to solve these problems, a structure for fixing a temperature sensor to a control target has been examined. For example, PTL 1 discloses a thermistor attachment structure in which a tip of a pressing portion abuts on a side surface of a thermistor inserted into a thermo-sensitive cylinder, and an angle formed between the side surface of the thermistor on a cylinder insertion end side and the pressing portion is an acute angle.

In addition, as a structure having a dedicated fixing component, PTL 2 discloses that a sensor holding portion that is in contact with substantially the entire detection portion of the temperature sensor and an attachment portion that is formed integrally with the sensor holding portion and is detachably attached to a pipe are provided, and the attachment portion has a double structure having a gap.

### Citation List

### Patent Literature

PTL 1: JP 2015-152298 A
PTL 2: JP 2003-75031 A

### Summary of Invention

### Technical Problem

In PTL 1, the inside of a temperature measuring unit of the thermistor is inserted into an opening portion, and a thermistor attachment structure for fixing the temperature measuring unit is further inserted into the opening portion.

However, only the temperature measuring unit of the thermistor is pressed against the inner wall surface, and the wiring connected to the temperature measuring unit does not come into contact with a temperature measuring target. Therefore, the temperature of the wiring is not the measurement target temperature but is equal to the temperature of the ambient air. Thus, there arises a problem that the temperature of the temperature measuring unit changes due to the temperature difference between the temperature measuring unit and the wiring, and the temperature of the temperature measuring unit is different from the actual temperature of the measurement target.

In addition, PTL 2 has a structure in which a sensor holding unit that comes into contact with the detection unit of the temperature sensor is provided, and the sensor holding unit is fixed to the temperature measuring unit as a measurement target. As a result, the temperature sensor can be detachably fixed to the temperature measuring unit. On the other hand, since the temperature of the surface is measured, there is a difference from the internal temperature of the control target. For example, there is a problem that, when the control target temperature higher than room temperature is intended to be measured, a sensor instruction value indicates a value lower than the internal temperature of the control target. In addition, similarly to PTL 1, since the wiring of the temperature sensor is not fixed to the measurement target, there is a problem that the temperature measuring unit cannot correctly output the measurement target temperature due to a temperature difference between the temperature measuring unit and the wiring.

Therefore, an object of the present invention is to provide a temperature control device capable of accurately instructing a temperature of a temperature regulating block by setting a temperature measuring unit and a wiring to have the same temperature as a temperature of the temperature regulating block and realizing highly accurate temperature control.

### Solution to Problem

In order to solve the above problems, according to the present invention, a temperature control device includes a temperature regulating block capable of accommodating a sample and/or a reagent, a temperature control unit that controls a temperature of the temperature regulating block, a first opening portion formed in the temperature regulating block, and a pressing portion that insert a temperature sensor including a temperature measuring unit and a wiring into the first opening portion such that the temperature measuring unit abuts on the temperature regulating block. The pressing portion presses the temperature measuring unit and the wiring against an inner wall surface of the first opening portion.

### Advantageous Effects of Invention

According to the present invention, it is possible to provide a temperature control device capable of accurately instructing a temperature of a temperature regulating block by setting a temperature measuring unit and a wiring to have the same temperature as a temperature of the temperature regulating block and realizing highly accurate temperature control.

Objects, configurations, and advantageous effects other than those described above will be clarified by the descriptions of the following exemplary embodiments.

### Brief Description of Drawings

[FIG. 1] FIG. 1 is a schematic perspective view of a temperature control device according to Embodiment 1 of the present invention.
[FIG. 2] FIG. 2 is a schematic sectional view taken along line A-A' of a temperature regulating block constituting the temperature control device illustrated in FIG. 1.
[FIG. 3] FIG. 3 is a schematic sectional view taken along line B-B' of a temperature regulating block constituting the temperature control device illustrated in FIG. 1.
[FIG. 4] FIG. 4 is a B-B' schematic sectional view of the temperature regulating block illustrated in FIG. 1, and is a view illustrating a case where one surface of a pressing portion constituting the temperature control device is a flat surface.
[FIG. 5] FIG. 5 is a B-B' schematic sectional view of the temperature regulating block illustrated in FIG. 1, and is a view illustrating a case where a cross section of the pressing portion constituting the temperature control device is polygonal.
[FIG. 6] FIG. 6 is a schematic sectional view of a temperature regulating block constituting a temperature control device according to Embodiment 2 of the present invention.
[FIG. 7] FIG. 7 is a schematic sectional view of a temperature regulating block constituting a temperature control device according to Embodiment 3 of the present invention.
[FIG. 8] FIG. 8 is a schematic sectional view of a temperature regulating block constituting a temperature control device according to Embodiment 4 of the present invention.
[FIG. 9] FIG. 9 is a schematic sectional view of a temperature regulating block constituting a temperature control device according to Embodiment 5 of the present invention.
[FIG. 10] FIG. 10 is a schematic sectional view of a temperature regulating block constituting a temperature control device according to Embodiment 6 of the present invention, and is a view corresponding to a section taken along line B-B' in FIG. 1.
[FIG. 11] FIG. 11 is a schematic sectional view of the temperature regulating block constituting the temperature control device according to Embodiment 6 of the present invention, and is a view corresponding to a section taken along line A-A' in FIG. 1.

### Description of Embodiments

Hereinafter, embodiments of the present invention will be described with reference to the drawings.

### Embodiment 1

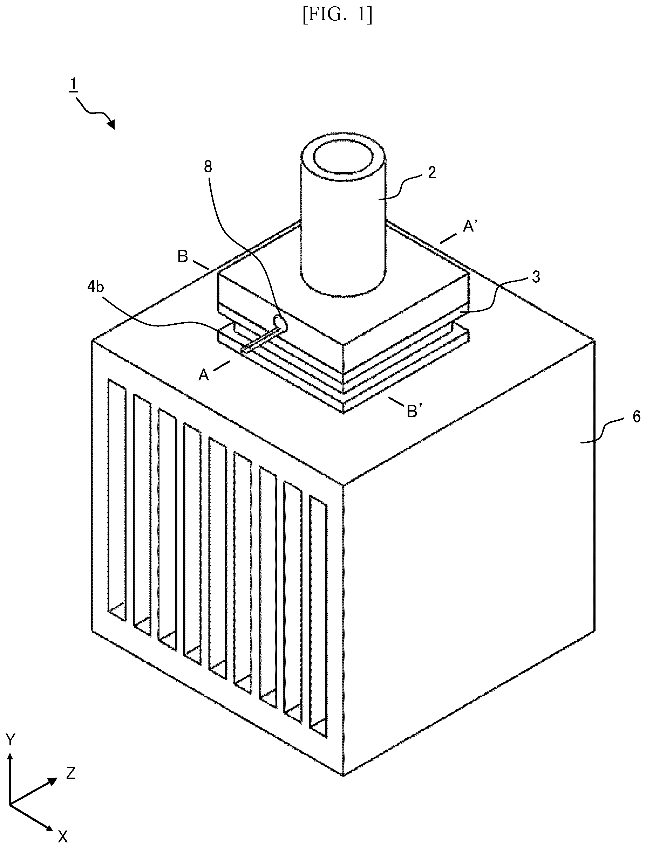

FIG. 1 is a schematic perspective view of a temperature control device according to Embodiment 1 of the present invention. As shown in FIG. 1, a temperature control device 1 includes a temperature regulating block 2, a temperature control unit 3, a temperature sensor 4, a heat dissipation portion 6, a first opening portion 8 formed in the temperature regulating block 2 to insert the temperature sensor 4, and a pressing portion 7 (which will be described later) that inserts which the temperature sensor 4 into the first opening portion 8 (which will be described later). The temperature regulating block 2 is configured by, for example, a cylindrical portion (hollow portion) and a flat plate portion, and can accommodate a sample and/or a reagent. Note that the shape of the temperature regulating block 2 is not limited to this, and only needs to be any shape as long as a sample and/or a reagent can be accommodated and the temperature can be controlled by the temperature control unit 3. In addition, the temperature sensor 4 is configured by a temperature measuring unit 4a and a wiring 4b. One end of the wiring 4b is connected to the temperature measuring unit 4a, and the other end is connected to a data logger or a data collection device (not illustrated).

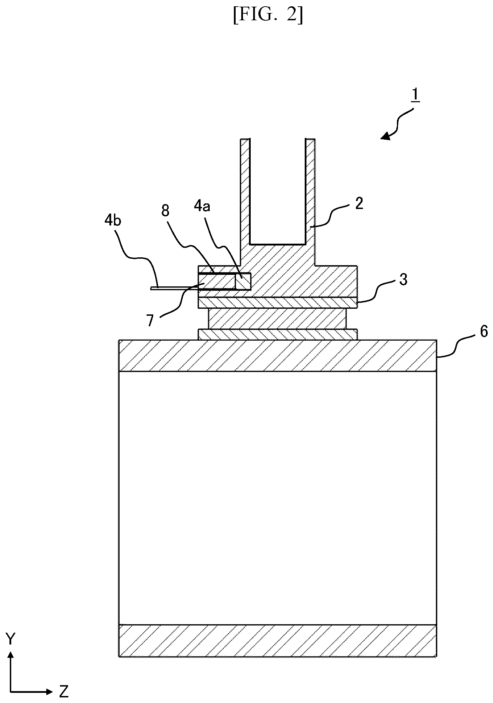

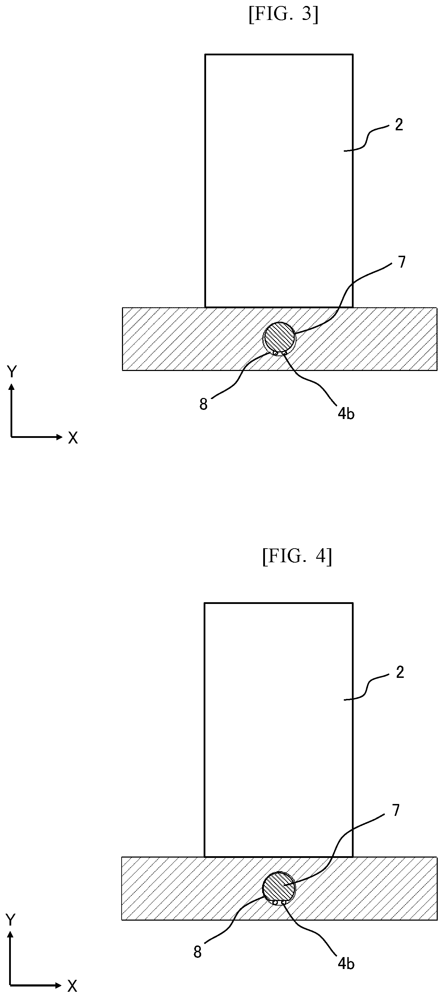

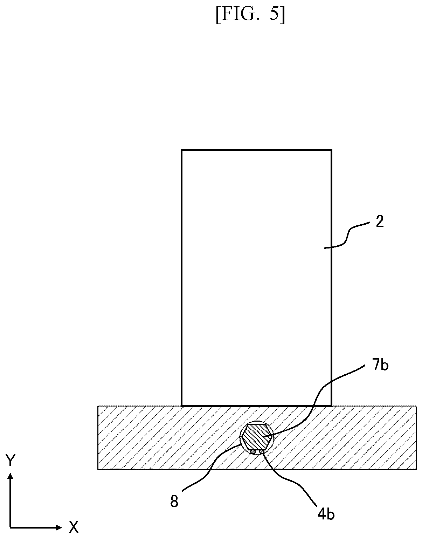

FIG. 2 is a schematic sectional view taken along line A-A' of the temperature regulating block constituting the temperature control device 1 illustrated in FIG. 1. In addition, FIG. 3 is a schematic sectional view taken along line B-B' of the temperature regulating block constituting the temperature control device illustrated in FIG. 1. FIG. 4 is a B-B' schematic sectional view of the temperature regulating block illustrated in FIG. 1, and illustrates a case where one surface of a pressing portion constituting the temperature control device 1 is a flat surface. FIG. 5 is a B-B' schematic sectional view of the temperature regulating block illustrated in FIG. 1, and illustrates a case where a cross section of the pressing portion 7 constituting the temperature control device is polygonal. As illustrated in FIGS. 2 to 5, the temperature regulating block 2 is provided with the first opening portion 8, and the temperature sensor 4 is inserted into the first opening portion 8. At this time, the temperature measuring unit 4a constituting the temperature sensor 4 is pressed against the inner wall surface of the first opening portion 8 by the pressing portion 7, and the tip of the temperature measuring unit 4a abuts on the temperature regulating block 2. Further, the wiring 4b constituting the temperature sensor 4 is pressed against the inner wall surface of the first opening portion 8 by the side surface of the pressing portion 7 illustrated in FIG. 2. Here, the temperature regulating block 2 is formed of, for example, a material having high thermal conductivity such as aluminum or copper.

According to the present embodiment, the temperature measuring unit 4a constituting the temperature sensor 4 is pressed against the inner wall surface of the first opening portion 8 and comes into contact with the temperature regulating block 2, whereby the contact thermal resistance between the temperature regulating block 2 and the temperature measuring unit 4a is reduced, and the temperature of the temperature regulating block 2 can be accurately detected. Further, the wiring 4b constituting the temperature sensor 4 is pressed against the inner wall surface of the first opening portion 8 by the pressing portion 7 and comes into contact with the temperature regulating block 2. As a result, the temperature of the wiring 4b becomes equal to that of the temperature regulating block 2, the temperatures of both the temperature measuring unit 4a and the wiring 4b become equal to that of the temperature regulating block 2, and the temperature of the wiring 4b is affected by the ambient environment temperature. The influence of heat dissipation from the temperature measuring unit 4a to the ambient air via the wiring 4b can be ignored, and the temperature of the temperature regulating block 2 can be accurately detected by the temperature sensor 4. This is because, if the length of the wiring 4b falls within a range of three to five times the length in the longitudinal direction of the temperature measuring unit 4a in the first opening portion 8, the influence of heat dissipation from the temperature measuring unit 4a to the ambient air via the wiring 4b can be ignored.

Furthermore, when the wiring 4b is fixed to the temperature regulating block 2 by the pressing portion 7 to move the temperature control device 1, even though a force is applied to the wiring 4b, the positional relationship between the temperature measuring unit 4a and the temperature regulating block 2 does not change, temperature measurement with high reproducibility and high reliability can be performed, and temperature control with high reliability can be performed.

Here, the first opening portion 8 may be filled with thermal conductive grease or an adhesive in order to reduce the contact thermal resistance of an interface between the temperature measuring unit 4a constituting the temperature sensor 4 and the inner wall surface of the first opening portion 8. In addition, it is desirable that the wiring 4b constituting the temperature sensor 4 comes into contact with the inner wall surface of the first opening portion 8, and the fixed length is substantially the same as or longer than the temperature measuring unit 4a. That is, it is desirable that the first opening portion 8 is opened from the end surface of the temperature regulating block 2 at a depth of twice or more the length of the temperature measuring unit 4a. Further, it is desirable that the pressing portion 7 is made of a flexible material. When the pressing portion 7 is made of a resin component such as polypropylene, polyethylene or polyester, the pressing portion 7 is pushed into the opening portion 8 while being crushed, whereby the temperature measuring unit 4a and the wiring 4b are pressed against the inner wall surface of the first opening portion 8, and the contact thermal resistance is reduced. In addition, by forming the diameter of the first opening portion 8 to be smaller than the sum of the diameter of the pressing portion 7 and the diameter of the wiring 4b, the pressing portion 7 can press the wiring 4b against the first opening portion 8. However, the pressing portion 7 is not limited to a cylinder, and may have a shape such as a pressing portion 7a in which a part of the shape of the cross section of the cylinder is a flat surface as illustrated in FIG. 4 or a pressing portion 7b in which the cross section is a polygon as illustrated in FIG. 5. In the case of the pressing portion 7a in which a part of the cylinder illustrated in FIG. 4 is a flat surface, the wiring 4b constituting the temperature sensor 4 is pressed against the inner wall surface of the first opening portion 8 by the flat surface of the pressing portion 7a. In addition, in the case of the polygonal pressing portion 7b as illustrated in FIG. 5, one side (plane) of the pressing portion 7b presses the wiring 4b constituting the temperature sensor 4 against the inner wall surface of the first opening portion 8. The temperature control unit 3 may be configured by, for example, a heater, a Peltier element, a heat pump, or the like.

As described above, according to the present embodiment, it is possible to provide a temperature control device capable of accurately instructing a temperature of a temperature regulating block by setting a temperature measuring unit and a wiring to have the same temperature as a temperature of the temperature regulating block and realizing highly accurate temperature control.

In addition, the pressing portion presses the temperature measuring unit constituting the temperature sensor against the inner wall surface of the first opening portion provided in the temperature regulating block, and presses the wiring constituting the temperature sensor against the inner wall surface of the first opening portion. As a result, not only the temperature measuring unit of a temperature measuring sensor but also the wiring comes into close contact with the temperature regulating block, whereby the temperatures of the temperature measuring unit and the wiring become equal to that of the temperature regulating block, and the temperature of the temperature regulating block can be accurately measured.

### Embodiment 2

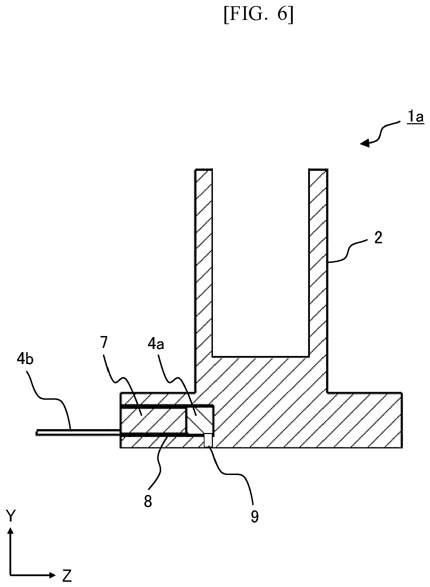

FIG. 6 is a schematic sectional view of a temperature regulating block 2 constituting a temperature control device 1a according to Embodiment 2 of the present invention. The present embodiment is different from Embodiment 1 in that a second opening portion 9 communicating with the first opening portion 8 provided in the temperature regulating block 2 is provided. The same components as those in Embodiment 1 are denoted by the same reference signs, and repetitive description will be omitted below.

As illustrated in FIG. 6, in the first opening portion 8 provided in the temperature regulating block 2, the second opening portion 9 is provided in a direction (+Z direction) toward the center of the temperature regulating block 2. At this time, the second opening portion 9 communicates with the first opening portion 8 and penetrates in the bottom surface direction (-Y direction) of the temperature regulating block 2. Here, it is desirable that the second opening portion 9 is provided at a position including at least a region of the first opening portion 8 where the temperature measuring unit 4a constituting the temperature sensor 4 abuts on the temperature regulating block 2. However, the present embodiment is not limited thereto, and the second opening portion 9 may be provided at a position including a region of the first opening portion 8 where the temperature measuring unit 4a exists.

In the present embodiment, since the second opening portion 9 is provided, it is possible to visually confirm that the temperature measuring unit 4a constituting the temperature sensor 4 is in close contact with the first opening portion 8. In addition, it is possible to suppress variations during assembly and to accurately measure the temperature of the temperature regulating block 2 by the temperature sensor 4. In addition, when the first opening portion 8 is filled with thermal conductive grease or an adhesive and the temperature sensor 4 is inserted, since the second opening portion 9 is provided, the thermal conductive grease pushed by the temperature sensor 4 and the pressing portion 7 is pushed out from the second opening portion 9 communicating with the first opening portion 8. As a result, the first opening portion 8 and the temperature sensor 4 can be filled with the thermal conductive grease, the contact thermal resistance is reduced, and the temperature of the temperature regulating block 2 can be accurately measured. In addition, by confirming the thermal conductive grease from the second opening portion 9, it is possible to confirm that the temperature measuring unit 4a is inserted into the first opening portion 8 and pressed against the inner wall surface. Here, when the opening area of the second opening portion 9 is large, the heat transfer area from the temperature control unit 3 to the temperature regulating block 2 is reduced, and the temperature change is reduced. Therefore, it is desirable that the opening area of the second opening portion 9 is equal to or smaller than that of the first opening portion 8.

As described above, according to the present embodiment, in addition to the effects of Embodiment 1 described above, by providing the second opening portion 9, it is possible to visually confirm that the temperature measuring unit 4a is in close contact with the first opening portion 8, and it is possible to suppress variations during assembly and to accurately measure the temperature of the temperature regulating block 2 by the temperature sensor 4.

In addition, when the first opening portion 8 is filled with thermal conductive grease or an adhesive and the temperature sensor 4 is inserted, since the second opening portion 9 is provided, the thermal conductive grease pushed by the temperature sensor 4 and the pressing portion 7 is pushed out from the second opening portion 9 communicating with the first opening portion 8. As a result, the first opening portion 8 and the temperature sensor 4 can be filled with the thermal conductive grease, the contact thermal resistance is reduced, and the temperature of the temperature regulating block 2 can be accurately measured.

### Embodiment 3

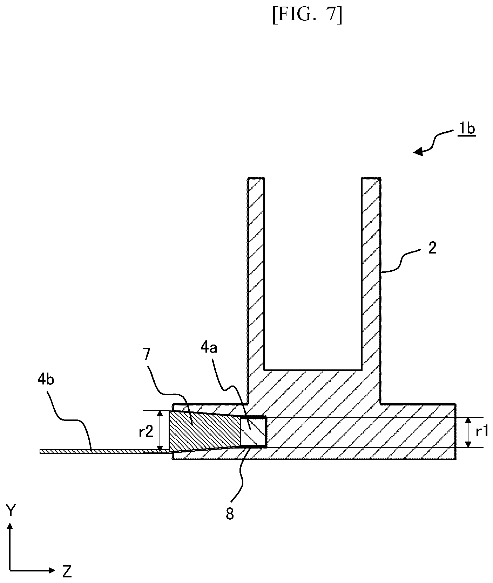

FIG. 7 is a schematic sectional view of a temperature regulating block 2 constituting a temperature control device 1b according to Embodiment 3 of the present invention. The present embodiment is different from Embodiment 1 in that the section of the first opening portion 8 provided in the temperature regulating block 2 has a shape that narrows from the outer peripheral side (-Z direction) toward the central portion (+Z direction) of the temperature regulating block 2. The same components as those in Embodiment 1 are denoted by the same reference signs, and repetitive description will be omitted below.

As illustrated in FIG. 7, when a diameter of the temperature measuring unit 4a that abuts on the temperature regulating block 2 in a direction toward the center of the temperature regulating block 2 in the first opening portion 8 (+Z direction) is represented by r1, and a diameter of an outer peripheral side (-Z direction in FIG. 7) of the temperature regulating block 2 is represented by r2, a structure of r1 < r2 is adopted. Similarly, the pressing portion 7 also has a shape in which the diameter in the direction (+Z direction) toward the center of the temperature regulating block 2 is substantially the same as r1 and the diameter on the outer peripheral side of the temperature regulating block 2 (-Z direction in FIG. 7) is substantially the same as **r2.**

In the present embodiment, the pressing portion 7 has a structure in which the pressing portion 7 narrows in the direction toward the center of the temperature regulating block 2 (+Z direction). Thus, the side surface of the pressing portion 7 and the inner wall surface of the first opening portion 8 are pressed by inserting the pressing portion 7 in the +Z direction, the wiring 4b constituting the temperature sensor 4 comes into close contact with the first opening portion 8, and the contact thermal resistance decreases, whereby the temperature of the temperature regulating block 2 by the temperature measuring unit 4 constituting the temperature sensor 4 can be detected more accurately.

Here, the shapes of the first opening portion 8 and the pressing portion 7 are not limited to the conical shape, and may be a polygon, a shape obtained by combining two or more diameters, or a shape narrowed stepwise as long as the shape narrows in the +Z direction.

As described above, according to the present embodiment, in addition to the effects of Embodiment 1 described above, it is easy to further reduce the contact thermal resistance by improving the close contact properties between the wiring 4b constituting the temperature sensor 4 and the first opening portion 8.

### Embodiment 4

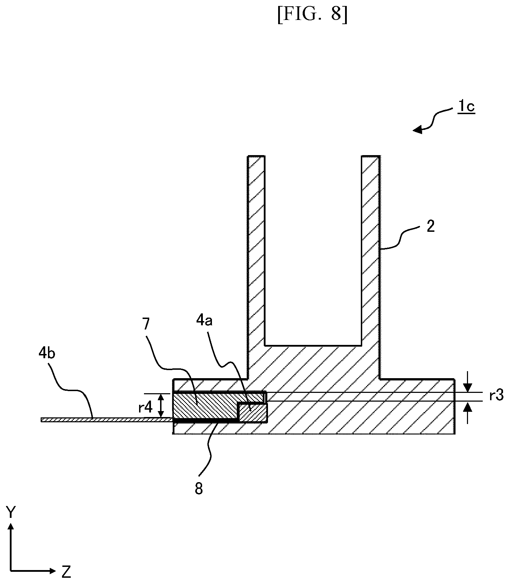

FIG. 8 is a schematic sectional view of a temperature regulating block 2 constituting a temperature control device 1c according to Embodiment 4 of the present invention. The present embodiment is different from Embodiment 1 in that the pressing portion 7 has two-step diameters. The same components as those in Embodiment 1 are denoted by the same reference signs, and repetitive description will be omitted below.

As illustrated in FIG. 8, the pressing portion 7 has a shape having two steps of diameters r3 and r4. It is assumed that, in the pressing portion 7, a diameter of a region that presses the temperature measuring unit 4a constituting the temperature sensor 4 against the inner wall surface of the first opening portion 8 is set as r3, and a diameter of a region that presses the wiring 4b constituting the temperature sensor 4 is set as r4.

In the present embodiment, a portion having the diameter r3 in the pressing portion 7 not only presses the temperature measuring unit 4a constituting the temperature sensor 4 against the first opening portion 8 in the +Z direction (direction toward the center of the temperature regulating block 2) but also simultaneously presses the temperature measuring unit 4a constituting the temperature sensor 4 against the first opening portion 8 in the -Y direction. In addition, a portion having the diameter r4 in the pressing portion 7 presses the wiring 4b constituting the temperature sensor 4 against the inner wall surface of the first opening portion 8. With these structures, the contact area between the temperature measuring unit 4a and the inner wall surface of the first opening portion 8 increases, and the contact thermal resistance between the temperature measuring unit 4a and the temperature regulating block 2 is reduced. Thus, the temperature of the temperature regulating block 2 can be accurately measured by the temperature sensor 4.

Here, the diameter provided in the pressing portion 7 is not limited to two steps of r3 and r4, and may be formed in three or more steps. In addition, the pressing direction of the temperature measuring unit 4a pressed by the pressing portion 7 is not limited to the -Y direction, and pressing in the +Y direction or the X direction may be performed.

As described above, according to the present embodiment, in addition to the effects of Embodiment 1 described above, the contact area between the temperature measuring unit 4a and the inner wall surface of the first opening portion 8 increases, and the contact thermal resistance between the temperature measuring unit 4a and the temperature regulating block 2 is reduced. Thus, the temperature of the temperature regulating block 2 can be accurately measured by the temperature sensor 4.

### Embodiment 5

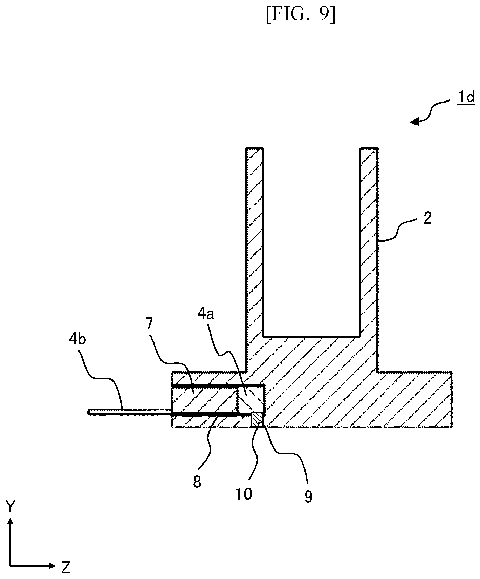

FIG. 9 is a schematic sectional view of a temperature regulating block 2 constituting a temperature control device 1d according to Embodiment 5 of the present invention. The present embodiment is different from Embodiment 1 in that the second opening portion 9 communicating with the first opening portion 8 provided in the temperature regulating block 2 is provided, and pressing is performed from the second opening portion 9 by using the second pressing portion 10. The same components as those in Embodiment 1 are denoted by the same reference signs, and repetitive description will be omitted below.

As illustrated in FIG. 9, in the present embodiment, since the second opening portion 9 communicating with the first opening portion 8 provided in the temperature regulating block 2 is provided, and the second pressing portion 10 is inserted from the second opening portion 9, whereby the temperature measuring unit 4a constituting the temperature sensor 4 is pressed against the inner wall surface of the first opening portion 8.

In the present embodiment, the temperature measuring unit 4a constituting the temperature sensor 4 can be pressed against the first opening portion 8 by the pressing portion 7 in the +Z direction (direction toward the center of the temperature regulating block 2), and the temperature measuring unit 4a can be further pressed against the inner wall surface of the first opening portion 8 by the second pressing portion 10 in the +Y direction (upward in the vertical direction). As a result, the contact area of the temperature measuring unit 4a with the inner wall surface of the first opening portion 8 increases, and the contact thermal resistance decreases, so that the temperature of the temperature regulating block 2 can be accurately measured by the temperature measuring unit 4a. Here, the shapes of the second opening portion 9 and the second pressing portion 10 are not limited to a cylindrical shape, and may be polygonal.

As described above, according to the present embodiment, in addition to the effects of Embodiment 1 described above, the same effects as those of Embodiment 4 described above can be obtained.

### Embodiment 6

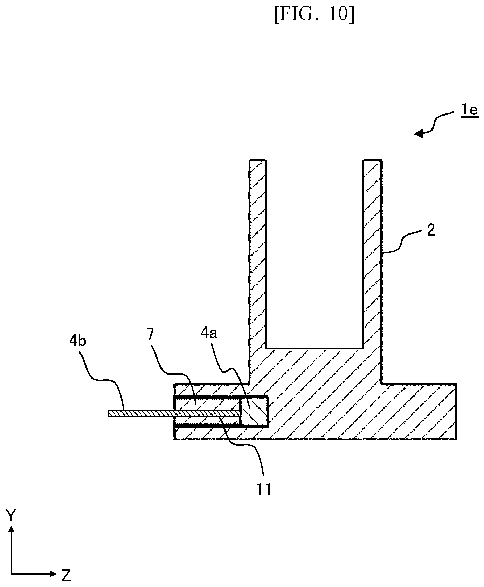

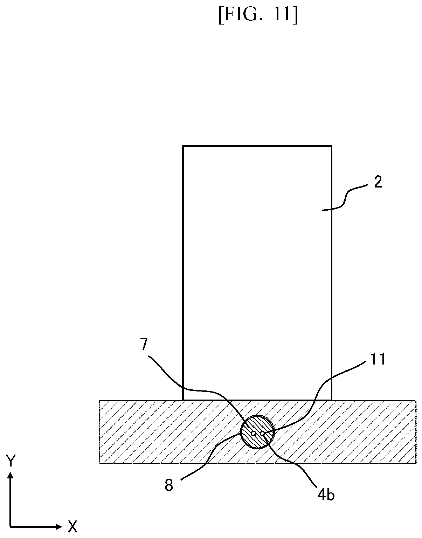

FIG. 10 is a schematic sectional view of a temperature regulating block 2 constituting a temperature control device 1e according to Embodiment 6 of the present invention, and is a view corresponding to a section taken along line B-B' in FIG. 1. FIG. 11 is a schematic sectional view of the temperature regulating block constituting the temperature control device 1e according to Embodiment 6 of the present invention, and is a view corresponding to a section taken along line A-A' in FIG. 1. The present embodiment is different from Embodiment 1 in that a through-hole 11 is formed in the pressing portion 7, and a wiring 4b constituting the temperature sensor 4 communicates with the through-hole 11. The same components as those in Embodiment 1 are denoted by the same reference signs, and repetitive description will be omitted below.

As illustrated in FIGS. 10 and 11, the through-hole 11 is formed in the pressing portion 7, and the wiring 4b constituting the temperature sensor 4 is caused to pass through the through-hole 11 to the outside of the temperature regulating block 2. Note that it is desirable that the shape of the cross section of the through-hole 11 is substantially the same as the shape of the cross section of the wiring 4b constituting the temperature sensor 4.

In the present embodiment, the wiring 4b constituting the temperature sensor 4 can come into contact with the temperature regulating block 2 via the pressing portion 7, and the contact area can be increased, so that the temperature of the temperature regulating block 2 can be accurately measured by the temperature measuring unit 4a. Here, the pressing portion 7 is desirably formed of a material having high thermal conductivity.

As described above, according to the present embodiment, it is possible to exhibit the same effects as those of Embodiment 1.

The present invention is not limited to the above embodiments, and various modification examples may be provided. For example, the above embodiments are described in detail in order to explain the present invention in an easy-to-understand manner, and the above embodiments are not necessarily limited to a case including all the described configurations. Further, some components in one embodiment can be replaced with the components in another embodiment, and the configuration of another embodiment can be added to the configuration of one embodiment.

### Reference Signs List

- 1, 1a, 1b, 1c, 1d, 1e: temperature control device
- 2: temperature regulating block
- 3: temperature control unit
- 4: temperature sensor
- 4a: temperature measuring unit
- 4b: wiring
- 6: heat dissipation portion
- 7: pressing portion
- 7a: pressing portion in which part of cylinder is flat surface
- 7b: polygonal pressing portion
- 8: first opening portion
- 9: second opening portion
- 10: second pressing portion
- 11: through-hole

## Claims

1. A temperature control device comprising:
a temperature regulating block capable of accommodating a sample and/or a reagent;
a temperature control unit that controls a temperature of the temperature regulating block;
a first opening portion formed in the temperature regulating block; and
a pressing portion that inserts a temperature sensor including a temperature measuring unit and a wiring into the first opening portion such that the temperature measuring unit abuts on the temperature regulating block,
wherein the pressing portion presses the temperature measuring unit and the wiring against an inner wall surface of the first opening portion.

2. The temperature control device according to claim 1, wherein the pressing portion has any one of a shape having a flat surface in at least a part of a columnar shape and a shape of a cross section of a columnar shape and a shape having a polygonal cross section.

3. The temperature control device according to claim 1, wherein the first opening portion is formed in a direction toward a center of the temperature regulating block,
the temperature regulating block is provided with a second opening portion, and
the second opening portion communicates with the first opening portion and penetrates in a bottom surface direction of the temperature regulating block.

4. The temperature control device according to claim **3,** wherein the second opening portion is provided at a position including a region of the first opening portion in which the temperature measuring unit abuts on the temperature regulating block or at a position including a region of the first opening portion in which the temperature measuring unit exists.

5. The temperature control device according to claim 4, wherein an opening area of the second opening portion is equal to or smaller than an opening area of the first opening portion.

6. The temperature control device according to claim **1,** wherein the first opening portion has a shape that narrows toward a central portion of the temperature regulating block.

7. The temperature control device according to claim 6, wherein the pressing portion has a shape in which a diameter of a cross section decreases toward the central portion of the temperature regulating block.

8. The temperature control device according to claim 1, wherein the pressing portion has a shape having a plurality of diameter regions in a direction toward a central portion of the temperature regulating block.

9. The temperature control device according to claim 8, wherein the pressing portion has a shape in which a diameter of a region that presses the temperature measuring unit against the inner wall surface of the first opening portion is smaller than a diameter of a region that presses the wiring against the inner wall surface of the first opening portion.

10. The temperature control device according to claim 3, further comprising:
a second pressing portion that presses the temperature measuring unit from the second opening portion upward in a vertical direction of the inner wall surface of the first opening portion.

11. The temperature control device according to claim 1, wherein the pressing portion includes a through-hole, and a shape of a cross section of the through-hole is substantially the same as a shape of a cross section of the wiring.

12. The temperature control device according to any one of claims 2, 5, 7, 9, and 11, wherein the temperature regulating block is configured by a cylindrical portion capable of accommodating a sample and/or a reagent and a flat plate portion in which the first opening portion is formed.
